# EUROPEAN PATENT APPLICATION

(11) **EP 1 298 896 A2**
(43) Date of publication of application: **02.04.2003**
(21) Application number: 02256341.5
(22) Date of filing: 12.09.2002
(51) Int. Cl.: H04M 1/725

(54) **Electronic device and mobile radio terminal apparatus**

(30) Priority: 01.10.2001 JP 2001305766; 26.08.2002 JP 2002245371
(71) Applicant: Kabushiki Kaisha Toshiba, Tokyo 105-8001 (JP)
(72) Inventor: Tanabe, Masayoshi, Int. Prop. Division, Tokyo 105-8001 (JP); Yoshizumi, Hideo, Int. Prop. Division, Tokyo 105-8001 (JP); Igarashi, Junichi, Int. Prop. Division, Tokyo 105-8001 (JP); Wagai, Kiyoshi, Int. Prop. Division, Tokyo 105-8001 (JP); Tsukui, Yasuhiro, Int. Prop. Division, Tokyo 105-8001 (JP)
(74) Representative: Brookes Batchellor

(57) **Abstract**

A picture processing unit (150) converts moving picture data which is read from a memory unit (140) by a control unit (200a) into picture data and voice data. The picture data is displayed on a display unit (171) through a driver (160) and the voice data is output from a speaker (114) through a PCM code processing unit (108) and an amplifier (113). If a folding detecting unit (130) detects that a terminal apparatus is in a folded state during reproduction and output of a moving picture through the display unit (171), the control unit (200) continues picture processing of the picture processing unit (150). However, the control unit (200a) suspends converting the voice data into an analog voice signal by the PCM code processing unit (108) or an amplifying operation of an amplifier (113) to stop output of the voice.

## Description

This invention relates to a mobile radio terminal apparatus or PDA (Personal Digital Assistant) terminal employed in a mobile communication system such as potable telephone system or the like and, more particularly, an electronic device which can be folded in two or which comprises an openable/closable cover.

An electronic device such as a mobile radio terminal apparatus, PDA terminal or the like employed in a mobile communication system such as portable telephone system or the like is capable of being folded in two or comprises an openable/closable cover, as is well known. A display unit of the apparatus or device can be protected or wrong operations caused by contact to an operation unit can be prevented by folding the apparatus or device or opening/closing the cover.

Recently, a portable electronic device as described above comprises a function of reproducing moving pictures or voice. A large amount of information items can be sent by making a user see and hear the information items.

In the above-described conventional portable device, however, there is a problem that in a case where seeing and hearing the picture and voice information needs to be temporarily suspended, it is difficult to provide an operation unit with an instruction to suspend the reproduction of the moving pictures or voice and thereby operability is small as the operation unit is small.

The present invention is accomplished to solve the above problem, and it is an object of the present invention is to provide an electronic device capable of stopping voice reproduction with simple operations even if seeing and hearing the picture and voice information needs to be suspended temporarily.

To achieve this object, there is provided an electronic device having a structure capable of opening/closing a housing, comprising display means, speaker means, opening/closing detecting means for detecting opening/closing of the housing, and control means for controlling the display means and the speaker means outputting moving pictures and voice, respectively, on the basis of data corresponding to moving picture information and voice information. If the opening/closing detecting means detects that the housing is closed while the output of the moving pictures and voice is controlled, the control means controls suspension of the voice output through the speaker means.

In the above-constituted electronic device, if the housing is closed while the output of the moving pictures and voice is controlled, the voice output through the speaker means is stopped.

Thus, according to the electronic device, when seeing and hearing the picture and voice information needs to be suspended temporarily, the voice reproduction can be stopped by simple operations such as folding the electronic device.

Moreover, the present invention is accomplished to solve the above problem, and it is an object of the present invention is to provide a mobile radio terminal apparatus capable of temporarily suspending the reproduction of moving pictures and voice with simple operations.

To achieve this object, there is provided an electronic device having a structure capable of opening/closing a housing, comprising opening/closing detecting means for detecting opening/closing of the housing, signal generating means for generating a picture signal and a voice signal from data including moving picture information and voice information, display means for displaying a moving picture on the basis of the picture signal generated by the signal generating means, speaker means for outputting the voice on the basis of the voice signal generated by the signal generating means, and control means for controlling the signal generating means to control the display of the moving picture and the output of the voice, and controlling the signal generating means to suspend the display of the moving picture and the output of the voice if the opening/closing detecting means detects that the housing is in a closed state during the output control of the moving picture and the voice.

In the above-constituted electronic device, the display of the moving picture and the output of the voice are suspended if the housing is closed during the control of output of the moving picture and the voice.

Thus, according to the electronic device, when seeing and hearing the picture and voice information needs to be suspended temporarily, the voice reproduction can be stopped by simple operations such as folding the terminal apparatus.

This summary of the invention does not necessarily describe all necessary features so that the invention may also be a sub-combination of these described features.

The invention can be more fully understood from the following detailed description when taken in conjunction with the accompanying drawings, in which:
FIG. 1 shows a block diagram of an electronic device according to a first embodiment of the present invention;
FIG. 2 shows an appearance of the electronic device of FIG. 1 in a folded state;
FIG. 3 shows an appearance of the electronic device of FIG. 1 in an opened state;
FIG. 4 shows a flowchart explaining operations of the electronic device of FIG. 1 at moving picture reproduction;
FIG. 5 shows a block diagram of an electronic device according to a second embodiment of the present invention; and
FIG. 6 shows a flowchart explaining operations of the electronic device of FIG. 5 at moving picture reproduction.

Embodiments of the present invention will be explained below with reference to the drawings.

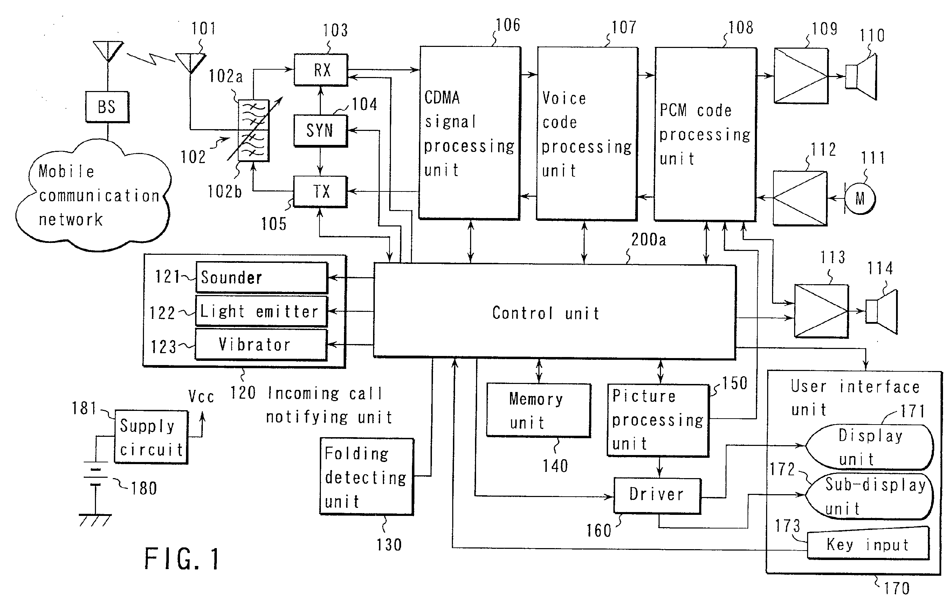

FIG. 1 shows a constitution of a mobile radio terminal apparatus according to a first embodiment of the present invention. This mobile radio terminal apparatus is an example of an apparatus which makes CDMA (Code Division Multiple Access) radio communication with a base station BS.

A radio frequency signal transmitted from the base station BS and received by an antenna 101 is input to a duplexer 102. The duplexer 102 comprises a receiving filter 102a and a transmitting filter 102b.

A radio frequency signal transmitted from the base station BS, of the radio frequency signals which are input from the antenna 101, is passed through the receiving filter 102a and output to a receiving unit (RX) 103. This radio frequency signal is not input from the transmitting filter 102b to a sending unit 105 to be described later.

The receiving unit 103 mixes the radio frequency signal with a receiving local oscillation signal, which is input from a frequency synthesizer (SYN) 104, and frequency-converts the mixed signal into an intermediate frequency signal.

The frequency of the receiving local oscillation signal generated from the frequency synthesizer 104 is controlled in accordance with a control signal from a control unit 200a. The receiving unit 103 comprises a function of detecting a received field strength of a radio signal having a frequency designated by the control unit 200a.

The intermediate frequency signal obtained by the receiving unit 103 is subjected to quadrature demodulation, despread, and converted into receive data of a predetermined format according to a data rate, in a CDMA signal processing unit 106. The receive data is output to a voice code processing unit 107. Data representing a data rate is output to the control unit 200a.

The voice code processing unit 107 decompresses the receive data obtained by the CDMA signal processing unit 106 in accordance with a receive data rate notified by the control unit 200a. A result of the decompression is output to a PCM code processing unit 108.

The PCM code processing unit 108 decodes the receive data decompressed by the voice code processing unit 107 to obtain an analog receive speech signal. The analog receive speech signal is amplified by an amplifier 109 and output from a speaker 110.

When voice data is input from a picture processing unit 150 to the PCM code processing unit 108, the PCM code processing unit 108 decodes the voice data to obtain an analog voice signal. Thus, the decoded analog voice signal is amplified by an amplifier 113 and output from a speaker 114.

Amplification levels in the amplifier 109 and amplifier 113 are controlled by the control unit 200a.

On the other hand, an input voice of a user is input from a microphone (M) 111 as an analog send speech signal and amplified to a proper level by an amplifier 112. The amplified signal is subjected to PCM coding by the PCM code processing unit 108 and output to the voice code processing unit 107 as send data.

The voice code processing unit 107 detects an amount of energy of the input voice from the send data which is output from the PCM code processing unit 108. The voice code processing unit 107 determines the data rate on the basis of a result of the detection and notifies the control unit 200a of the data rate. Then, the voice code processing unit 107 compresses the send data to a burst signal of a format corresponding to the data rate and outputs the burst signal to the CDMA signal processing unit 106.

The CDMA signal processing unit 106 spreads the burst signal compressed by the voice code processing unit 107 by using a PN code corresponding to a sending channel. Then, the CDMA signal processing unit 106 processes a result of the compression in quadrature modulation and outputs the result to the sending unit (TX) 105 as a quadrature modulation signal.

The sending unit 105 synthesizes the quadrature modulation signal with a sending local oscillation signal and converts the synthesized signal into a radio frequency signal. Then, the sending unit 105 processes an only effective part of the radio frequency signal by high-frequency amplification on the basis of the send data rate notified by the control unit 200a and outputs the effective part to the duplexer 102. The sending local oscillation signal is generated by the frequency synthesizer 104 and has a frequency corresponding to the control signal from the control unit 200a.

Of radio frequency signals which are input from the sending unit 105 to the duplexer 102, an only radio frequency signal in a transmission band is output to the antenna 101 and emitted into a space toward the base station BS. This radio frequency signal in the transmission band is not input to the receiving unit 103 through the receiving filter 102a.

If there is an incoming call for the terminal apparatus, an incoming call notifying unit 120 notifies the user of the incoming call under the control of the control unit 200a. The incoming call notifying unit 120 comprises a sounder 121 which notifies the user of the incoming call by emitting an audible sound, a light emitter 122 which notifies the user of the incoming call by emitting light, and a vibrator 123 which notifies the user of the incoming call by generating vibration with, for example, an eccentric motor or the like.

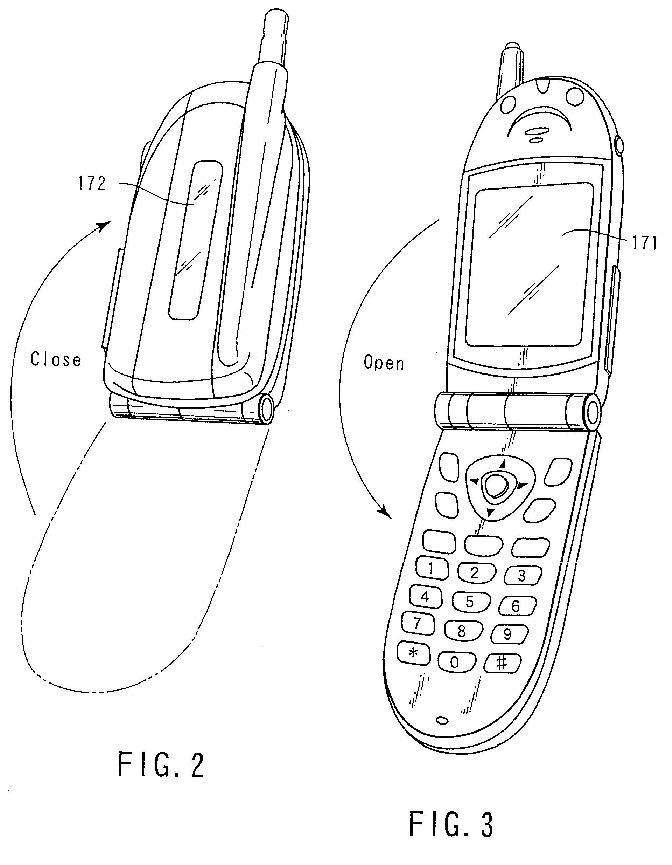

A folding detecting unit 130 detects whether the mobile radio terminal apparatus is in a folded state (FIG. 2) or in an opened state (FIG. 3). The folding detecting unit 130 notifies the control unit 200a of a result of the detection.

A memory unit 140 comprises, for example, a semiconductor memory such as a ROM, RAM or the like as a memory medium. The memory medium stores data formed by the user including telephone directory data corresponding to names, telephone numbers, and the like, moving picture data including moving images and voices corresponding to the moving images, moving picture reproduction control data relating to reproduction control of the moving picture data, and the like.

A picture processing unit 150 comprises an exclusive picture processing IC which decodes picture data of, for example, MPEG (Moving Picture Experts Group)-4 and the like. Operations of the picture processing unit 150 are controlled by the control unit 200a. The picture processing unit 150 reads the moving picture data, which is input from the control unit 200a, and converts the moving picture data into picture data and voice data by a predetermined data processing. Then, the picture processing unit 150 outputs the picture data to a driver 160 and the voice data to the PCM code processing unit 108.

The driver 160 controls a display unit 171 of a user interface unit 170 to be described later on basis of picture data which is input from the picture processing unit 150, to control display/non-display and control a still picture or a moving picture.

The driver 160 also controls display/non-display of a sub-display unit 172 in accordance with instructions from the control unit 200a and controls displaying contents corresponding to the instructions from the control unit 200a on the sub-display unit 172.

The user interface unit 170 comprises the display unit 171, the sub-display unit 172 and a key input unit 173. The display unit 171 is composed of, for example, an LCD (Liquid Crystal Display), an EL (Electro Luminescence) display, or the like, to visually display to the user states (outgoing call/incoming call, residual battery, receiving strength) of the apparatus, dial data which is read from the memory unit 140, and various images including moving images.

The sub-display unit 172 is composed of a small LCD and is provided on a back of the mobile radio terminal apparatus or the like. When the apparatus is folded, the sub-display unit 172 notifies the user of the state of the apparatus and occurrence of incoming calls.

The key input unit 173 comprises keys for general communication functions relating to incoming and outgoing calls such as a ten-key employed to input dial numbers, and keys for various setting and various functions such as switching of incoming call notifying methods (audible sound/light/vibrator/no information) and the like.

The control unit 200a comprises the CPU, ROM, RAM and the like. The CPU controls the units of the mobile radio terminal apparatus on the basis of control programs and control data stored in the ROM.

Main controls of the CPU include communication control to control the receiving unit 103, frequency synthesizer 104, sending unit 105 and CDMA signal processing unit 106, establish a CDMA radio communication link with the base station BS and make communication in the mobile communication network including the base station BS.

The control unit 200a also comprises a control function of controlling the picture processing unit 150 and allowing moving images to be reproduced when the user requests reproduction of moving images through the key input unit 173. The control unit 200a is capable of controlling moving picture reproduction in response to a result of the detection of the folding detecting unit 130 as a new controlling function.

Moreover, the control unit 200a comprises a timer function T.

Reference numeral 181 denotes a supply circuit, which generates a predetermined operation supply voltage Vcc on the basis of an output of a battery 180 and supplies the voltage to each circuit.

Next, operations of the above-constituted mobile radio terminal apparatus will be explained.

The following explanations relate to operations of moving picture reproduction, and an explanation about operations relating to voice communication and data communication through the mobile communication network is omitted.

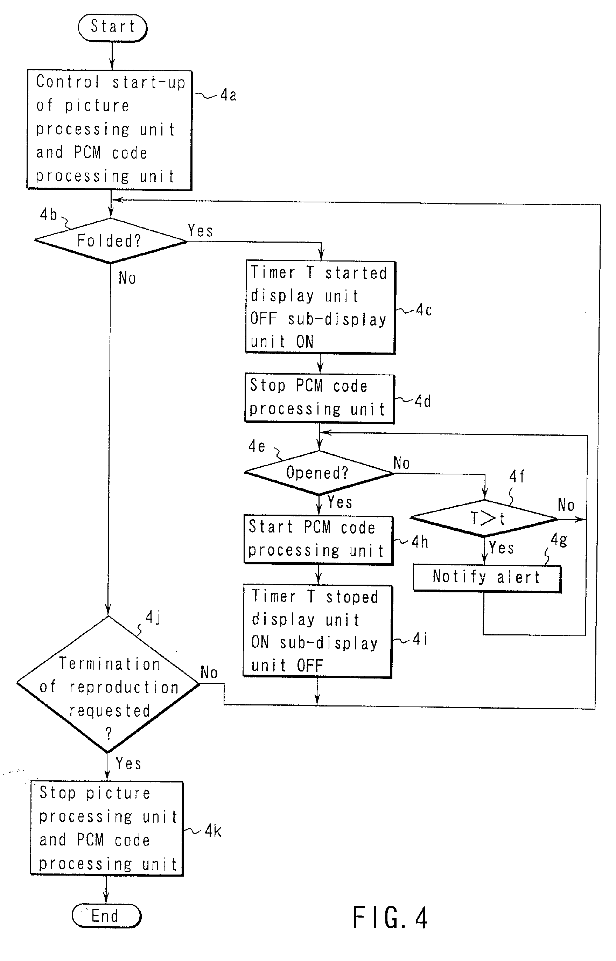

FIG. 4 is a flowchart explaining a processing of moving picture reproduction. This processing is executed by the control unit 200a. When the mobile radio terminal apparatus is not in a folded state as shown in FIG. 3, the processing is started if the user requests moving picture reproduction by the key input unit 173.

First, the control unit 200a controls start-up of the picture processing unit 150 and PCM code processing unit 108 at step 4a.

The control unit 200a starts a processing of reading the moving picture data responding to an instruction from the user out of the memory unit 140 and outputting the moving picture data to the picture processing unit 150. The operation shifts to step 4b.

Thus, the picture processing unit 150 starts the data processing, converts the moving picture data which is input from the control unit 200a into picture data and voice data, outputs the picture data to the driver 160 and outputs the voice data to the PCM code processing unit 108.

On the other hand, the driver 160 controls drive of the display unit 171 to control display of a moving picture, on the basis of the picture data which is input from the picture processing unit 150.

The voice data which is output from the picture processing unit 150 to the PCM code processing unit 108 is converted into an analog voice signal by the PCM code processing unit 108. The analog voice signal is amplified by the amplifier 113 and output from the speaker 114.

At step 4b, the control unit 200a refers to the result of detection of the folding detecting unit 130 and discriminates whether or not the mobile radio terminal apparatus is folded, i.e. the terminal apparatus is in a state shown in FIG. 2.

If the mobile radio terminal apparatus is folded, the operation shifts to step 4c. If the mobile radio terminal apparatus is not folded, the operation shifts to step 4j to continue the moving picture reproduction.

At step 4c, the control unit 200a starts up the timer T to start time count, and provides the driver 160 with an instruction to stop the display of the display unit 171, an instruction to start the display of the sub-display unit 172 and display data of the sub-display unit 172. The operation shifts to step 4d.

Thus, the driver 160 sets the display unit 171 in an OFF state to stop the display, and makes the sub-display unit 172 display "REPRODUCING MOVING PICTURE" on the basis of the display data from the control unit 200a.

The picture processing unit 150 further continues the moving picture reproduction.

At step 4d, the control unit 200a controls suspension of the PCM code processing unit 108 and also controls suspension of the amplification of the amplifier 113 to stop the voice output. The operation shifts to step 4e.

At step 4e, the control unit 200a refers to the result of detection of the folding detecting unit 130 and discriminates whether or not the mobile radio terminal apparatus is opened, i.e. the terminal apparatus is in the state shown in FIG. 3.

If the terminal apparatus is opened, the operation shifts to step 4h. If the terminal apparatus is not opened, the operation shifts to step 4f.

At step 4f, the control unit 200a discriminates whether or not a count value of the timer T is greater than a predetermined value t.

If the count value of the timer T is greater than the predetermined value t, the operation shifts to step 4g. If the count value is not greater than the predetermined value t, the operation shifts to step 4e.

At step 4g, the control unit 200a controls the operation of the incoming call notifying unit 120 and provides the driver 160 with display data indicating an alert that the moving picture reproduction in the folded state of the terminal apparatus continues for more than a predetermined period t. The operation shifts to step 4e.

Thus, by the operation of the incoming call notifying unit 120 and the display data of the sub-display unit 172 controlled by the driver 160, it is notified to the user that the moving picture reproduction in the folded state of the terminal apparatus continues for more than the predetermined period t.

At step 4h, the control unit 200a starts up the PCM code processing unit 108 and restarts the amplifying operation of the amplifier 113 to restart the voice output. The operation shifts to step 4i.

At step 4i, the control unit 200a stops the time count by the timer T and controls the driver 160 to restart output of the moving picture on the display unit 171 and stop the display of the sub-display unit 172. The operation shifts to step 4b.

At step 4j, the control unit 200a discriminates whether or not a request for termination of the moving picture reproduction is made by the key input unit 173.

If the request for termination of the moving picture reproduction is made, the operation shifts to step 4k. If the request for termination of the moving picture reproduction is not made, the operation shifts to step 4b.

At step 4k, the control unit 200a stops the picture processing unit 150 and PCM code processing unit 108. Thus, the processing is terminated.

As described above, if the above-constituted mobile radio terminal apparatus becomes folded while reproducing the moving picture on the display unit 171, the picture processing unit 150 continues the picture processing, but the processing of converting the voice data into an analog voice signal by the PCM code processing unit 108 and the amplifying operation of the amplifier 113 are suspended to stop the voice output.

If seeing the moving pictures and hearing the voice need to be suspended, the voice reproduction can be stopped by a simple operation such as folding the terminal apparatus.

Further, the picture processing unit 150 continues the picture processing while the terminal apparatus is folded. Therefore, the suspended moving picture reproduction and output can be quickly restarted by opening the terminal apparatus. As the restart does not require the restarting operation of the picture processing unit 150, rereading processing of the moving picture data, or the like, the restart can be quickly executed.

Moreover, even when the picture processing unit 150 continues the picture processing while the terminal apparatus is folded, the continued processing is displayed on the sub-display unit 172 for the user. If the picture processing unit 150 continues the picture processing for more than the predetermined period t, the user is notified of the continued processing by the incoming call notifying unit 120 and sub-display unit 172. It is therefore possible to prevent the user from forgetting that the moving picture is being reproduced.

The present invention is not limited to the above embodiment.

For example, reading the moving picture data stored in the memory unit 140, and reproducing and outputting the moving picture are explained in the above embodiment. However, even when the moving picture data is received through the base station BS and subjected to streaming reproduction, the present invention can be applied to the reproduction.

Needless to say, the present invention can be variously modified within a scope which does not exceed the gist of the present invention. If the present invention is applied not only to the mobile radio terminal apparatus of the mobile communication system, but also to other electronic devices such as PDA which can be folded in two or which comprise an openable/closable cover, the same advantage can be achieved.

Next, a mobile radio terminal apparatus according to a second embodiment of the present invention will be explained.

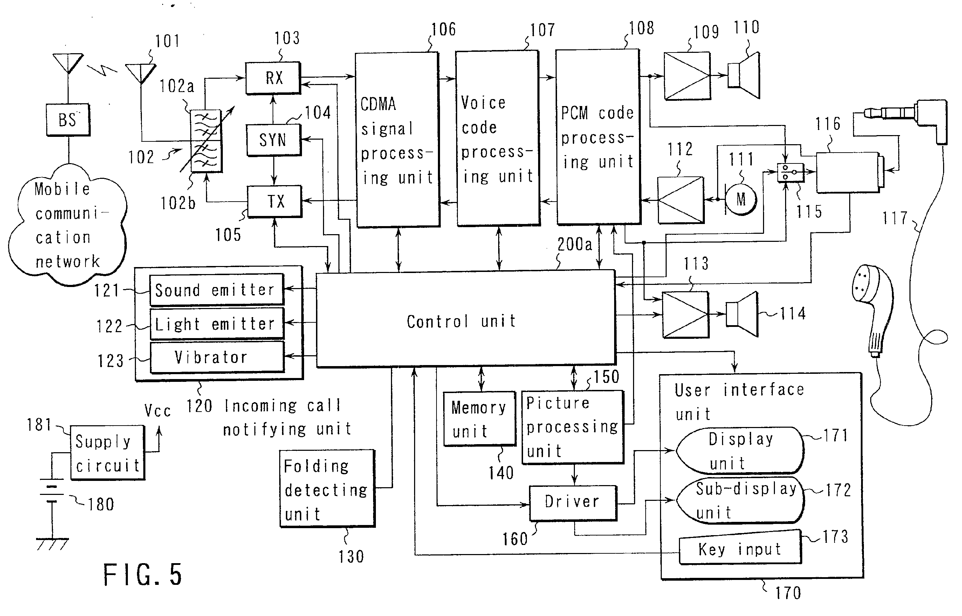

FIG. 5 shows a constitution of the mobile radio terminal apparatus. This mobile radio terminal apparatus is an example of an apparatus which makes CDMA (Code Division Multiple Access) radio communication with a base station BS.

A radio frequency signal transmitted from the base station BS and received by an antenna 101 is input to a duplexer 102. The duplexer 102 comprises a receiving filter 102a and a transmitting filter 102b.

The radio frequency signal transmitted from the base station BS, of the radio frequency signals which are input from the antenna 101, is passed through the receiving filter 102a and output to a receiving unit (RX) 103. This radio frequency signal is not input from the transmitting filter 102b to a sending unit 105 to be described later.

The receiving unit 103 mixes the radio frequency signal with a receiving local oscillation signal, which is input from a frequency synthesizer (SYN) 104, and frequency-converts the mixed signal into an intermediate frequency signal.

The frequency of the receiving local oscillation signal generated from the frequency synthesizer 104 is controlled in accordance with a control signal from a control unit 200b. The receiving unit 103 comprises a function of detecting a received field strength of a radio signal having a frequency designated by the control unit 200b.

The intermediate frequency signal obtained by the receiving unit 103 is subjected to quadrature demodulation, despread, and converted into receive data of a predetermined format according to a data rate, in a CDMA signal processing unit 106. The receive data is output to a voice code processing unit 107. Data representing a data rate is output to the control unit 200b.

The voice code processing unit 107 decompresses the receive data obtained by the CDMA signal processing unit 106 in accordance with a receive data rate notified by the control unit 200b. A result of the decompression is output to a PCM code processing unit 108.

The PCM code processing unit 108 decodes the receive data decompressed by the voice code processing unit 107 to obtain an analog receive speech signal. Thus, the decoded analog receive speech signal is amplified by an amplifier 109 and output from a speaker 110, or is output to a changeover switch 115 to be output from an earphone-microphone 117 to be described later.

When voice data is input from a picture processing unit 150 to the PCM code processing unit 108, the PCM code processing unit 108 decodes the voice data to obtain an analog voice signal. Thus, the decoded analog voice signal is amplified by an amplifier 113 and output from a speaker 114, or is output to the changeover switch 115 to be output from the earphone-microphone 117.

Amplification levels in the amplifier 109 and amplifier 113 are controlled by the control unit 200b.

On the other hand, an input voice of a user is input from a microphone (M) 111 or the earphone-microphone 117 as an analog send speech signal and amplified to a proper level by an amplifier 112. The amplified signal is subjected to PCM coding by the PCM code processing unit 108 and output to the voice code processing unit 107 as send data.

The voice code processing unit 107 detects an amount of energy of the input voice from the send data which is output from the PCM code processing unit 108. The voice code processing unit 107 determines the data rate on the basis of a result of the detection and notifies the control unit 200b of the data rate. Then, the voice code processing unit 107 compresses the send data to a burst signal of a format corresponding to the data rate and outputs the burst signal to the CDMA signal processing unit 106.

The CDMA signal processing unit 106 spreads the burst signal compressed by the voice code processing unit 107 by using a PN code corresponding to a sending channel. Then, the CDMA signal processing unit 106 processes a result of the compression in quadrature modulation and outputs the result to the sending unit (TX) 105 as a quadrature modulation signal.

The sending unit 105 synthesizes the quadrature modulation signal with a sending local oscillation signal and converts the synthesized signal into a radio frequency signal. Then, the sending unit 105 processes an only effective part of the radio frequency signal by high-frequency amplification on the basis of the send data rate notified by the control unit 200b and outputs the effective part to the duplexer 102. The sending local oscillation signal is generated by the frequency synthesizer 104 and has a frequency corresponding to the control signal from the control unit 200b.

Of radio frequency signals which are input from the sending unit 105 to the duplexer 102, an only radio frequency signal in a transmission band is output to the antenna 101 and emitted into a space toward the base station BS. This radio frequency signal in the transmission band is not input to the receiving unit 103 through the receiving filter 102a.

The changeover switch 115 has two input terminals. The analog receive speech signal is input from the PCM code processing unit 108 to one of the input terminals. The analog voice signal is input from the PCM code processing unit 108 to another input terminal. Either of the input terminals is connected to an earphone-microphone jack 116 under the control of the control unit 200b such that either the analog receive speech signal or the analog voice signal is output to the earphone-microphone jack 116.

A plug of the earphone-microphone 117 is connected to the earphone-microphone jack 116. Thus, the analog signal which is input from the changeover switch 115 is output to the earphone-microphone 117 while the voice signal which is input from the earphone-microphone 117 is output to the amplifier 112.

The earphone-microphone jack 116 detects whether or not the earphone-microphone 117 is connected to the earphone-microphone jack 116 and notifies the control unit 200b of a result of the detection.

The earphone-microphone 117 comprises a microphone and a small speaker for voice input/output. The earphone-microphone 117 also comprises the plug as interface, which is connected electrically and physically to the earphone-microphone jack 116.

If there is an incoming call for the terminal apparatus, an incoming call notifying unit 120 notifies the user of the incoming call under the control of the control unit 200b. The incoming call notifying unit 120 comprises a sounder 121 which notifies the user of the incoming call by emitting an audible sound, a light emitter 122 which notifies the user of the incoming call by emitting light, and a vibrator 123 which notifies the user of the incoming call by generating vibration with, for example, an eccentric motor or the like.

A folding detecting unit 130 detects whether the mobile radio terminal apparatus is in a folded state (FIG. 2) or in an opened state (FIG. 3). The folding detecting unit 130 notifies the control unit 200b of a result of the detection.

A memory unit 140 comprises, for example, a semiconductor memory such as a ROM, RAM or the like as a memory medium. The memory medium stores data formed by the user including telephone directory data corresponding to names, telephone numbers, and the like, moving picture data including moving images and voices corresponding to the moving images, moving picture reproduction control data relating to reproduction control of the moving picture data, and the like.

A picture processing unit 150 comprises an exclusive picture processing IC which decodes picture data of, for example, MPEG (Moving Picture Experts Group)-4 and the like. Operations of the picture processing unit 150 are controlled by the control unit 200b. The picture processing unit 150 reads the moving picture data, which is input from the control unit 200b, and converts the moving picture data into picture data and voice data by a predetermined data processing. Then, the picture processing unit 150 outputs the picture data to a driver 160 and the voice data to the PCM code processing unit 108.

The driver 160 controls a display unit 171 of a user interface unit 170 to be described later on basis of picture data which is input from the picture processing unit 150, to control display/non-display and control a still picture or a moving picture.

The driver 160 also controls display/non-display of a sub-display unit 172 in accordance with instructions from the control unit 200b and controls displaying contents corresponding to the instructions from the control unit 200b on the sub-display unit 172.

The user interface unit 170 comprises the display unit 171, the sub-display unit 172 and a key input unit 173. The display unit 171 is composed of, for example, an LCD (Liquid Crystal Display), an EL (Electro Luminescence) display, or the like, to visually display to the user states (outgoing call/incoming call, residual battery, receiving strength) of the apparatus, dial data which is read from the memory unit 140, and various images including moving images.

The sub-display unit 172 is composed of a small LCD and is provided on a back of the mobile radio terminal apparatus or the like. When the apparatus is folded, the sub-display unit 172 notifies the user of the state of the apparatus and occurrence of incoming calls.

The key input unit 173 comprises keys for general communication functions relating to incoming and outgoing calls such as a ten-key employed to input dial numbers, and keys for various setting and various functions such as switching of incoming call notifying methods (audible sound/light/vibrator/no information) and the like.

The control unit 200b comprises the CPU, ROM, RAM and the like. The CPU controls the units of the mobile radio terminal apparatus on the basis of control programs and control data stored in the ROM.

Main controls of the CPU include communication control to control the receiving unit 103, frequency synthesizer 104, sending unit 105 and CDMA signal processing unit 106, establish a CDMA radio communication link with the base station BS and make communication in the mobile communication network including the base station BS.

The control unit 200b also comprises a control function of controlling the picture processing unit 150 and allowing moving images to be reproduced when the user requests reproduction of moving images through the key input unit 173. The control unit 200b is capable of controlling moving picture reproduction in response to a result of the detection of the folding detecting unit 130 as a new controlling function.

Moreover, the control unit 200b comprises a timer function T.

Reference numeral 181 denotes a supply circuit, which generates a predetermined operation supply voltage Vcc on the basis of an output of a battery 180 and supplies the voltage to each circuit.

Next, operations of the above-constituted mobile radio terminal apparatus will be explained.

The following explanations relate to operations of moving picture reproduction, and an explanation about operations relating to voice communication and data communication through the mobile communication network is omitted.

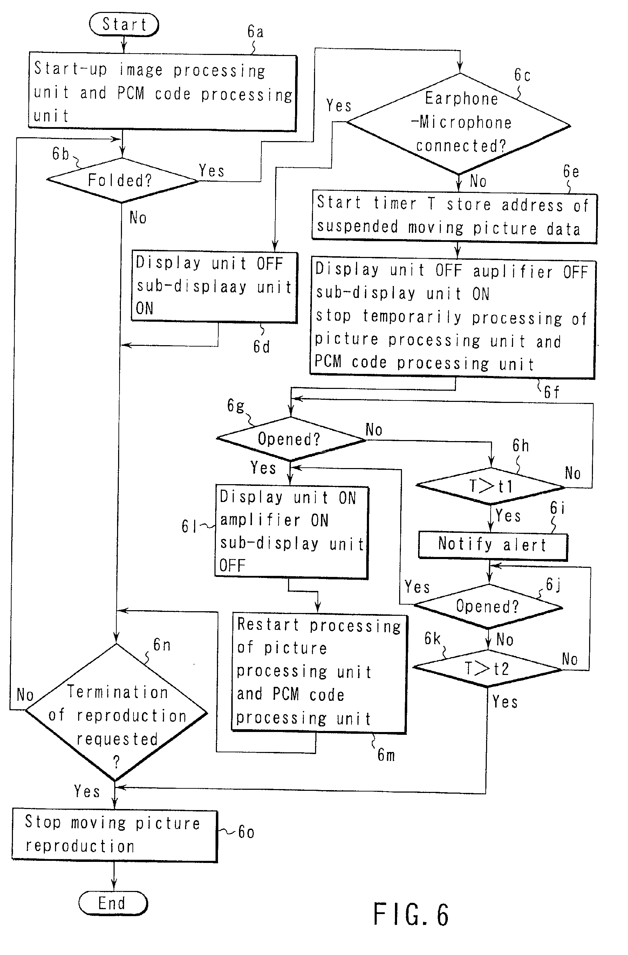

FIG. 6 is a flowchart explaining a processing of moving picture reproduction. This processing is executed by the control unit 200b. When the mobile radio terminal apparatus is not in a folded state as shown in FIG. 3, the processing is started if the user requests moving picture reproduction by the key input unit 173.

First, the control unit 200b controls start-up of the picture processing unit 150 and PCM code processing unit 108 at step 6a. The control unit 200b also controls a changing operation of changeover switch 115 so that the analog voice signal which is output from the PCM code processing unit 108 is output to the earphone-microphone jack 116.

The control unit 200b starts a processing of reading the moving picture data responding to an instruction from the user out of the memory unit 140 and outputting the moving picture data to the picture processing unit 150. The operation shifts to step 6b.

Thus, the picture processing unit 150 starts the data processing, converts the moving picture data which is input from the control unit 200b into picture data and voice data, outputs the picture data to the driver 160 and outputs the voice data to the PCM code processing unit 108.

On the other hand, the driver 160 controls drive of the display unit 171 to control display of a moving picture, on the basis of the picture data which is input from the picture processing unit 150.

The voice data which is output from the picture processing unit 150 to the PCM code processing unit 108 is converted into an analog voice signal by the PCM code processing unit 108. The analog voice signal is amplified by the amplifier 113 and output from the speaker 114.

If the earphone-microphone 117 is connected to the earphone-microphone jack 116, the analog voice signal is not output from the speaker 114, but input to the earphone-microphone 117 through the changeover switch 115 and earphone-microphone jack 116 and then output from the earphone-microphone 117.

At step 6b, the control unit 200b refers to the result of detection of the folding detecting unit 130 and discriminates whether or not the mobile radio terminal apparatus is folded, i.e. the terminal apparatus is in a state shown in FIG. 2.

If the mobile radio terminal apparatus is folded, the operation shifts to step 6c. If the mobile radio terminal apparatus is not folded, the operation shifts to step 6n to continue the moving picture reproduction.

At step 6c, the control unit 200b refers to a result of the detection of the earphone-microphone jack 116 and discriminate whether or not the earphone-microphone 117 is connected to the mobile radio terminal apparatus.

If the earphone-microphone 117 is connected to the mobile radio terminal apparatus, the operation shifts to step 6b. If the earphone-microphone 117 is not connected, the operation shifts to step 6e.

At step 6d, the control unit 200 provides the driver 160 with an instruction to stop the display of the display unit 171 and an instruction to start the display of the sub-display unit 172, reads display data used for the display of the sub-display unit 172 from the memory unit 140 and provides the driver 160 with the display data. Then the operation shifts to step 6n.

The driver 160 receiving the instructions in this manner makes the power supply of the display unit 171 in an OFF state and stops the display of the display unit 171. On the other hand, the driver 160 turns on the power supply of the sub-display unit 172 to make the sub-display unit 172 display "REPRODUCING VOICE" on the basis of the display data from the control unit 200.

At this time, the picture processing unit 150 continues the data processing started at the step 6a, converts the moving picture data which is input from the control unit 200 into picture data and voice data, outputs the picture data to the driver 160 and outputs the voice data to the PCM code processing unit 108.

As the driver 160 receives the picture data, but makes the power supply of the display unit 171 in an OFF state as explained above, the moving picture is not reproduced. On the other hand, the voice data which is output from the picture processing unit 150 to the PCM code processing unit 108 is converted into an analog voice signal at the PCM code processing unit 108.

The analog voice signal is output to the earphone-microphone 117 through the changeover switch 115 and the earphone-microphone jack 116 and then output from the earphone-microphone 117.

At step 6e, the control unit 200b starts up the timer T to start the time count, suspends the reading of the moving picture data from the memory unit 140, detects an address of the moving picture data in the memory unit 140 at the time of the suspension, and stores this address in the memory unit 140 as an suspension address. The operation shifts to step 6f.

At step 6f, the control unit 200b controls stopping temporarily the operations of the picture processing unit 150 and PCM code processing unit 108 and also controls stopping the amplifying operation of the amplifier 113. The operation shifts to step 6g.

Thus, the picture processing unit 150 suspends its own processing, and the moving picture reproduction is thereby suspended.

The control unit 200b also reads an instruction to stop the display of the display unit 171, an instruction to start the display of the sub-display unit 172 and display data of the sub-display unit 172 from the memory unit 140 to provide the driver 160 with the instructions and the display data.

Thus, the driver 160 sets the supply of the display unit 171 in the OFF state to stop the display. The driver 160 also turns on the sub-display unit 172 to display "MOVING PICTURE REPRODUCTION SUSPENDED" on the sub-display unit 172 on the basis of the display data from the control unit 200b.

At step 6g, the control unit 200b refers to the result of detection of the folding detecting unit 130 and discriminates whether or not the mobile radio terminal apparatus is opened, i.e. the terminal apparatus is in the state shown in FIG. 3.

If the terminal apparatus is opened, the operation shifts to step 61. If the terminal apparatus is not opened, the operation shifts to step 6h.

At step 6h, the control unit 200b discriminates whether or not a current count value of the timer T is greater than a predetermined value t1.

If the count value of the timer T is greater than the predetermined value t1, the operation shifts to step 6i. If the count value is not greater than the predetermined value t, the operation shifts to step 6g.

At step 6i, the control unit 200b controls the operation of the incoming call notifying unit 120 and provides the driver 160 with display data indicating an alert that the moving picture reproduction is suspended for more than a predetermined period t1. The operation shifts to step 6j.

Thus, by the notifying operation of the incoming call notifying unit 120 and the display data of the sub-display unit 172 controlled by the driver 160, it is notified to the user that the moving picture reproduction is suspended for more than the predetermined period t1.

At step 6j, the control unit 200b refers to the result of detection of the folding detecting unit 130 and discriminates whether or not the mobile radio terminal apparatus is opened, i.e. the terminal apparatus is in the state shown in FIG. 3.

If the terminal apparatus is opened, the operation shifts to step 61. If the terminal apparatus is not opened, the operation shifts to step 6k.

At step 6k, the control unit 200b discriminates whether or not a current count value of the timer T is greater than a predetermined value t2 (> t1).

If the count value of the timer T is greater than the predetermined value t2, the operation shifts to step 6o. If the count value is not greater than the predetermined value t2, the operation shifts to step 6j.

On the other hand, at step 61, the control unit 200b returns the amplifier 113 to the amplifying operation. The control unit 200b also provides the driver 160 with an instruction to start the display of the display unit 171 and an instruction to stop the display of the sub-display unit 172. The operation shifts to step 6m.

Thus, the driver 160 turns on the display unit 171 and sets the sub-display unit 172 in the OFF state.

At step 6m, the control unit 200b provides the picture processing unit 150 and PCM code processing unit 108 with an instruction to restart the processing. The control unit 200b also restarts the reading processing of reading the moving picture data stored in the memory unit 140 in accordance with the suspension address stored in the memory unit 140 at step 6e and outputting the moving picture data to the picture processing unit 150. The operation shifts to step 6n.

Thus, the picture processing unit 150 restarts the data processing, converts the moving picture data which is input from the control unit 200b into picture data and voice data, outputs the picture data to the driver 160 and outputs the voice data to the PCM code processing unit 108.

On the other hand, the driver 160 drives the display unit 171 to control the display of the moving picture, on the basis of the picture data which is input from the picture processing unit 150.

The voice data which is output from the picture processing unit 150 to the PCM code processing unit 108 is converted into an analog voice signal by the PCM code processing unit 108. The analog voice signal is amplified by the amplifier 113 and output from the speaker 114.

At step 6n, the control unit 200b discriminates whether or not the user makes a request for termination of the moving picture reproduction by the key input unit 173.

If the request for termination of the moving picture reproduction is made, the operation shifts to step 60. If the request is not made, the operation shifts to step 6b.

At step 60, the operations of the amplifier 113, picture processing unit 150 and PCM code processing unit 108 are stopped. Thus, the processing is terminated.

As described above, if the mobile radio terminal apparatus is folded while the voice and moving picture based on the moving picture data are reproduced and output, and if the earphone-microphone 117 is not connected to the terminal apparatus, the processing of the picture processing unit 150 and the processing of PCM code processing unit 108 are suspended temporarily, the amplifying operation of the amplifier 113 is stopped, the reproduction and output is stopped, and the position (address in the memory unit 140) of the moving picture data whose reproduction is suspended is stored.

When the folded state of the terminal apparatus is changed to the opened state, the moving picture data is read again from the suspended position thereof, operations of the picture processing unit 150, and PCM code processing unit 108 and amplifier 113 are controlled to restart the reproduction and output of the moving picture.

Thus, in the above-constituted mobile radio terminal apparatus, if seeing the moving pictures and hearing the voice need to be suspended, reproduction of voice and moving picture can be stopped by a simple operation such as folding the terminal apparatus. In addition, the reproduction and output of the moving picture can be restarted by changing the folded state of the terminal apparatus to the opened state.

If the certain period t1 passes after the terminal apparatus is folded, the user is notified of passage of the certain period after suspension of the reproduction and output by means of the sub-display unit 172 and incoming call notifying unit 120. It is therefore possible to prevent the user from forgetting the suspension of the reproduction and output of the moving picture.

Moreover, if the certain period t2 passes after the terminal apparatus is folded, the operations of the picture processing unit 150 and PCM code processing unit 108 are stopped to terminate the moving picture reproduction. It is therefore possible to prevent the user from forgetting that the moving picture is being reproduced and wasting the power of the battery 180.

When the terminal apparatus becomes folded during the reproduction and output of the moving picture data, if the earphone-microphone 117 is connected to the terminal apparatus, the display unit 171 is turned off to stop the moving picture output while the voice is reproduced and output through the earphone-microphone 117. It is therefore possible for the user to carry the terminal apparatus in the folded state and listen to the music through the earphone-microphone 117.

The present invention is not limited to the above embodiment.

For example, reading the moving picture data stored in the memory unit 140, and reproducing and outputting the moving picture are explained in the above embodiment. However, even when the moving picture data is received through the base station BS and subjected to streaming reproduction, the present invention can be applied to the reproduction.

Needless to say, the present invention can be variously modified within a scope which does not exceed the gist of the present invention. If the present invention is applied not only to the mobile radio terminal apparatus of the mobile communication system, but also to other electronic devices such as PDA which can be folded in two or which comprise an openable/closable cover, the same advantage can be achieved.

## Claims

1. An electronic device having a structure capable of opening/closing a housing, **characterized by** comprising:
display means (171);
speaker means (113, 114);
opening/closing detecting means (130) for detecting opening/closing of the housing; and
control means (108, 150, 160, 200a) for controlling the display means (171) and the speaker means (113, 114) outputting moving pictures and voice, respectively, on the basis of data corresponding to moving picture information and voice information,
wherein if the opening/closing detecting means (130) detects that the housing is closed while the output of the moving pictures and voice is controlled, the control means (108, 150, 160, 200a) controls suspension of the voice output through the speaker means (113, 114) .

2. An electronic device according to claim 1, **characterized in that** the control means (108, 150, 160, 200a) comprises picture processing means (150) for making processing for converting the data into video signals, and display controlling means (160) for controlling display of the video signals obtained from the processing of the picture processing means (150) on the display means (171); and
wherein the picture processing means (150) continues the processing for converting the data into the video signals, irrespective of a result of detection of the opening/closing detecting means (130).

3. An electronic device according to claim 1, **characterized in that** the control means (108, 150, 160, 200a) comprises picture processing means (150) for making the processing for converting the data into video signals, and display controlling means (160) for controlling the display of the video signals obtained from the processing of the picture processing means (150) on the display means (171); and
wherein if the opening/closing detecting means (130) detects that the housing is closed, the picture processing means (150) temporarily suspends the processing for converting the data into the video signals.

4. An electronic device according to any one of claims 2 and 3, **characterized in that** if the opening/closing detecting means (130) detects that the housing is closed, the display control means (160) stops the display of the display means (171).

5. An electronic device according to claim 1, **characterized by** further comprising:
notifying means (120) for making notification to at least one of senses of hearing, sight and touch; and
notification controlling means (200a) for controlling the notifying means (120) to notify that the output of the moving pictures and voice is suspended if a predetermined period passes after the control means (108, 150, 160, 200a) starts controlling the suspension of the voice output.

6. An electronic device according to claim 1, **characterized by** further comprising:
sub-display means (172) for allowing display to be seen from outside when the housing is closed; and
sub-display control means (160, 200a) for controlling the sub-display means (172) to display that the output of the moving pictures and voice is suspended while the control means (108, 150, 160, 200a) controls the suspension of the voice output.

7. An electronic device having a structure capable of opening/closing a housing, **characterized by** comprising:
opening/closing detecting means (130) for detecting opening/closing of the housing;
signal generating means (150, 160, 108) for generating a picture signal and a voice signal from data including moving picture information and voice information;
display means (171) for displaying a moving picture on the basis of the picture signal generated by the signal generating means (150, 160);
speaker means (114) for outputting the voice on the basis of the voice signal generated by the signal generating means (150, 108); and
control means (200b) for controlling the signal generating means (150, 160, 108) to control the display of the moving picture and the output of the voice, and controlling the signal generating means (150, 160, 108) to suspend the display of the moving picture and the output of the voice if the opening/closing detecting means (130) detects that the housing is in a closed state during the control of output of the moving picture and the voice.

8. An electronic device according to claim 7, **characterized in that** if the opening/closing detecting means (130) detects that the housing is in an opened state, the control means (200b) controls the signal generating means (150, 160, 108) to restart the suspended display of the moving picture and the suspended output of the voice.

9. An electronic device according to claim 7, **characterized by** further comprising:
output means (116) for outputting a signal of the voice to outside; and
connection detecting means (116) for detecting that an external device is connected to the output means (116),
wherein the control means (200b) outputs the voice signal generated by the signal generating means (150, 108) to outside through the output means (116) if the opening/closing detecting means (130) detects that the housing is in a closed state and if the connection detecting means (116) detects that an external device is connected to the output means (116).

10. An electronic device according to any one of claims 7 to 9, **characterized by** further comprising:
notifying means (120) for making notification to at least one of senses of hearing, sight and touch; and
notification controlling means (200b) for controlling the notifying means (120) to notify that the display of the moving picture and the output of the voice are suspended if a predetermined period passes after the control means (200b) starts controlling the suspension.

11. A mobile radio terminal apparatus having a structure capable of opening/closing a housing, **characterized by** comprising:
display means (171);
speaker means (113, 114);
opening/closing detecting means (130) for detecting opening/closing of the housing; and
control means (108, 150, 160, 200a) for controlling the display means (171) and the speaker means (113, 114) outputting moving pictures and voice, respectively, on the basis of data corresponding to moving picture information and voice information,
wherein if the opening/closing detecting means (130) detects that the housing is closed while the output of the moving pictures and voice is controlled, the control means (108, 150, 160, 200a) controls suspension of the voice output through the speaker means (113, 114).

12. A mobile radio terminal apparatus according to claim 11, **characterized in that** the control means (108, 150, 160, 200a) comprises picture processing means (150) for making processing for converting the data into video signals, and display controlling means (160) for controlling display of the video signals obtained from the processing of the picture processing means (150) on the display means (171); and
wherein the picture processing means (150) continues the processing for converting the data into the video signals, irrespective of a result of detection of the opening/closing detecting means (130).

13. A mobile radio terminal apparatus according to claim 11, **characterized in that** the control means (108, 150, 160, 200a) comprises picture processing means (150) for making the processing for converting the data into video signals, and display controlling means (160) for controlling the display of the video signals obtained from the processing of the picture processing means (150) on the display means (171); and
wherein if the opening/closing detecting means (130) detects that the housing is closed, the picture processing means (150) temporarily suspends the processing for converting the data into the video signals.

14. A mobile radio terminal apparatus according to any one of claims 12 and 13, **characterized in that** if the opening/closing detecting means (130) detects that the housing is closed, the display control means (160) stops the display of the display means (171).

15. A mobile radio terminal apparatus according to claim 11, **characterized by** further comprising:
notifying means (120) for making notification to at least one of senses of hearing, sight and touch; and
notification controlling means (200a) for controlling the notifying means (120) to notify that the output of the moving pictures and voice is suspended if a predetermined period passes after the control means (108, 150, 160, 200a) starts controlling the suspension of the voice output.

16. A mobile radio terminal apparatus according to claim 11, **characterized by** further comprising:
sub-display means (172) for allowing display to be seen from outside when the housing is closed; and
sub-display control means (160, 200a) for controlling the sub-display means (172) to display that the output of the moving pictures and voice is suspended while the control means (108, 150, 160, 200a) controls the suspension of the voice output.

17. A mobile radio terminal apparatus having a structure capable of opening/closing a housing, **characterized by** comprising:
opening/closing detecting means (130) for detecting opening/closing of the housing;
signal generating means (150, 160, 108) for generating a picture signal and a voice signal from data including moving picture information and voice information;
display means (171) for displaying a moving picture on the basis of the picture signal generated by the signal generating means (150, 160);
speaker means (114) for outputting the voice on the basis of the voice signal generated by the signal generating means (150, 108); and
control means (200b) for controlling the signal generating means (150, 160, 108) to control the display of the moving picture and the output of the voice, and controlling the signal generating means (150, 160, 108) to suspend the display of the moving picture and the output of the voice if the opening/closing detecting means (130) detects that the housing is in a closed state during the control of output of the moving picture and the voice.

18. A mobile radio terminal apparatus according to claim 17, **characterized in that** if the opening/closing detecting means (130) detects that the housing is in an opened state, the control means (200b) controls the signal generating means (150, 160, 108) to restart the suspended display of the moving picture and the suspended output of the voice.

19. A mobile radio terminal apparatus according to claim 17, **characterized by** further comprising:
output means (116) for outputting a signal of the voice to outside; and
connection detecting means (116) for detecting that an external device is connected to the output means (116),
wherein the control means (200b) outputs the voice signal generated by the signal generating means (150, 108) to outside through the output means (116) if the opening/closing detecting means (130) detects that the housing is in a closed state and if the connection detecting means (116) detects that an external device is connected to the output means (116) .

20. A mobile radio terminal apparatus according to any one of claims 17 to 19, **characterized by** further comprising:
notifying means (120) for making notification to at least one of senses of hearing, sight and touch; and
notification controlling means (200b) for controlling the notifying means (120) to notify that the display of the moving picture and the output of the voice are suspended if a predetermined period passes after the control means (200b) starts controlling the suspension.
